(19) Europäisches Patentamt / European Patent Office / Office européen des brevets

(11) **EP 3 254 885 A1**

(12) **DEMANDE DE BREVET EUROPEEN**

(43) Date de publication:
**13.12.2017 Bulletin 2017/50**

(51) Int Cl.:
**B60L 11/18** (2006.01)

(21) Numéro de dépôt: **16189062.9**

(22) Date de dépôt: **15.09.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **07.06.2016 FR 1655205**

(71) Demandeur: **Gruau Laval**
**53940 Saint-Berthevin (FR)**

(72) Inventeurs:
• **RICHARD, Rémy**
**53360 Simplé (FR)**
• **BABIN, Anthony**
**16310 Cherves-Châtelers (FR)**
• **LAURENT, Jean-Marie**
**53810 Changé (FR)**
• **RIZOUG, Nassim**
**53940 Saint Berthevin (FR)**

(74) Mandataire: **Vidon Brevets & Stratégie**
**16B, rue de Jouanet**
**B.P. 90333**
**Technopole Atalante**
**35703 Rennes Cedex 7 (FR)**

(54) **PROCÉDÉ DE DÉTERMINATION DE CARACTÉRISTIQUES PHYSIQUES DE BATTERIES EMBARQUÉES DANS UN VÉHICULE ÉLECTRIQUE EN FONCTION DES MISSIONS À EFFECTUER**

(57) Il est proposé un procédé de détermination de caractéristiques physiques de batteries embarquées dans un véhicule électrique, ledit véhicule étant destiné à effectuer au moins une mission. Le procédé comporte une étape préalable de saisie de paramètres physique caractérisant l'au moins une mission que le véhicule va effectuer prochainement, et une étape de sélection de caractéristiques physiques parmi un ensemble de caractéristiques en fonction de l'au moins une mission que ledit véhicule va effectuer prochainement. Selon un premier mode de réalisation, l'étape de sélection détermine un profil de charge de la batterie pour la charger à partir d'un état quasi déchargé, ledit profil de charge étant déterminé en fonction de la prochaine mission à effectuer. Selon un autre mode de réalisation, l'étape de sélection détermine le nombre de cellules de la batterie et la capacité globale de la batterie en fonction de l'ensemble des missions que ledit véhicule doit effectuer.

14.1 Rappel des caractéristiques de la batterie équipant le véhicule

14.2 Sélection de la mission à effectuer

14.3 Recherche des caractéristiques électriques de cette mission

14.4 Calcul de la quantité d'énergie $E_B$ utilisée pour la mission

14.5 Prise en compte d'une marge de sécurité k

14.6 Charge de la batterie avec une quantité $k \times E_B$ d'électricité

Fig. 14

EP 3 254 885 A1

**Description**

## 1. DOMAINE DE L'INVENTION

Le domaine de l'invention est celui de l'optimisation de la configuration des batteries et/ou de leur recharge en fonction de leur utilisation future.

## 2. ARRIÈRE-PLAN TECHNOLOGIQUE

Le domaine de l'invention est celui des véhicules électriques fonctionnant avec une batterie embarquée. La partie la plus onéreuse d'un véhicule électrique est sa batterie qui représente à elle seule entre 30 et 45% du prix total. Sa durée de vie dépend fortement de son utilisation et peut se réduire à un temps relativement faible devant la vie d'un véhicule thermique. Le cout de la batterie étant très élevé, il est indispensable, afin d'être compétitif sur le marché, de la dimensionner au plus juste des besoins, et d'éviter autant que possible son vieillissement en l'utilisant de la meilleure façon. Les cellules de batterie utilisées sont de préférence des accumulateurs au lithium phosphate de fer (LFP). Le choix de cette technologie est essentiellement dû au contexte du Véhicule Utilitaire Electrique (ou « VUE » en abrégé) qui se doit le plus sûr possible, or la chimie LFP est justement reconnue pour être plus stable thermiquement et électriquement que les autres technologies.

Compte tenu du cout de stockage de l'énergie, il en va de soi à cette étape de minimiser la quantité d'énergie au plus juste des besoins. De plus, la répartition de la masse d'une batterie, qui peut atteindre jusqu'à 30% de la masse totale du véhicule, représente à elle seule une dépense énergétique considérable. En effet, un véhicule électrique qui embarque une quantité d'énergie surdimensionnée par deux fois ses besoins consommerait au moins 30% de plus d'énergie, sans oublier un prix d'achat également 30% plus élevé au minimum. Il importe donc de pré-dimensionner la batterie à partir de l'utilisation prévue du véhicule, voire du profil de la mission que ce véhicule va effectuer. Un modèle de vieillissement spécifique qui permet de prendre en compte le vieillissement dû au cyclage, ainsi que celui dû au calendaire, vient boucler le modèle multi-physique des accumulateurs. Ce modèle de vieillissement semi-empirique est habituellement paramétré à partir d'essais de vieillissement. Grace au modèle énergétique et électrique du véhicule, les courants fournis par la batterie ont été estimés pour les missions choisies dans le but de générer les plans de test sur les cellules de batterie. Pour évaluer le vieillissement, deux types de vieillissement sont à prendre en compte : le vieillissement calendaire et le vieillissement en cyclage. Le vieillissement calendaire correspond à la perte de capacité d'une cellule, aussi appelé SOH (de l'anglo-saxon « State Of Health »), lorsque la cellule n'est pas utilisée. Il dépend de la température, du niveau de charge SOC (de l'anglo-saxon : « State Of Charge ») et du temps. La cellule vieillit d'autant plus que le niveau de charge et la température sont importants. En d'autres termes, une batterie rechargée à 100% entre deux utilisations voit sa capacité diminuer plus vite qu'une batterie qui n'est rechargée qu'à 50% entre deux utilisations.

## 3. EXPOSÉ DE L'INVENTION

Dans un mode de réalisation particulier de l'invention, il est proposé un procédé de détermination de caractéristiques physiques de batteries embarquées dans un véhicule électrique, ledit véhicule étant destiné à effectuer au moins une mission. Le procédé comporte une étape préalable de saisie de paramètres physiques caractérisant l'au moins une mission que le véhicule va effectuer prochainement, et une étape de sélection de caractéristiques physiques parmi un ensemble de caractéristiques en fonction de l'au moins une mission que ledit véhicule va effectuer prochainement.

Ainsi, la solution proposée repose sur une approche tout à fait nouvelle et inventive, permettant d'optimiser les caractéristiques physiques appliquées à la batterie en fonction des futures missions ou de la prochaine mission à réaliser par ce véhicule. De cette façon, la durée de vie de la batterie est optimale.

Selon un mode particulier de réalisation, l'étape de sélection détermine un profil de charge de la batterie pour la charger à partir d'un état quasi déchargé, ledit profil de charge étant déterminé en fonction de la prochaine mission à effectuer. De cette manière, la batterie du véhicule n'est pas rechargée au maximum mais suffisamment pour effectuer la mission prévue.

Selon un autre mode de réalisation, le profil de charge est calculé en fonction de l'un au moins des paramètres suivants déterminés à partir de l'état actuel des batteries :

- Capacité nominale indiquée par le constructeur de batteries,
- quantité d'énergie restant dans la batterie avant la charge,
- usure de la batterie en % réduisant ainsi la capacité nominale de cette batterie.

De cette manière, le profil de charge est optimisé en fonction de l'état actuel de la batterie.

Selon un autre mode de réalisation, le profil de charge est calculé en fonction de l'un au moins des paramètres suivants caractérisant la mission à effectuer : distance à effectuer, poids du chargement, température extérieure prévue, type de mission. De cette manière, le profil de charge est optimisé en fonction de l'état actuel de la batterie.

Selon un autre mode de réalisation, l'étape de sélection détermine le nombre de cellules de la batterie et la capacité globale de la batterie en fonction de l'ensemble des missions que ledit véhicule doit effectuer. De cette manière, il est possible de choisir la configuration de la batterie du véhicule en fonction des missions que ce véhicule var réaliser au cours de son utilisation.

Selon un autre mode de réalisation, des paramètres caractérisant les missions que ledit véhicule doit effectuer sont introduits et pris en compte dans la sélection du nombre de cellules de la batterie. Ces paramètres sont pris dans l'ensemble des paramètres suivants : distance parcourue par an, poids moyen des marchandises transpostés, température extérieure moyenne de l'endroit où les missions sont effectuées. De cette manière, les caractéristiques de la batterie du véhicule sont bien adaptées aux missions que celui-ci doit effectuer.

Selon un autre mode de réalisation, le procédé comporte une étape au moins de mesure de la quantité d'énergie fossile utilisée par un moteur thermique pour permettre à un véhicule de réaliser une mission, et une étape de calcul de l'énergie électrique équivalente pour effectuer la même mission à l'aide d'un véhicule électrique, les caractéristiques physiques sélectionnées pour effectuer ces missions prenant en compte l'énergie électrique équivalente ainsi calculée.

## 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 présente un véhicule électrique doté d'une batterie et connectée à un dispositif de charge ;
- la figure 2 présente un exemple de profil de vitesse sur un parcours donné en fonction du temps ;
- la figure 3 présente un exemple de profil de pente d'un parcours donné en fonction de la distance parcourue ;
- la figure 4 représente un exemple de modélisation multi-physique des composants de stockage d'énergie dans une batterie ;
- la figure 5 montre un exemple de schéma électrique équivalent à une batterie ;
- la figure 6 montre un exemple de schéma thermique équivalent à une batterie ;
- la figure 7 montre des exemples de diagramme de vieillissement calendaire d'une batterie ;
- la figure 8 montre l'évolution de la dégradation du SOH après 1500 cycles de cyclages purs ;
- la figure 9 présente un diagramme montrant l'influence de la recharge intelligente sur la durée de vie de la batterie ;
- la figure 10 illustre la comparaison de la rentabilité en fonction des kilomètres d'un véhicule thermique et d'un véhicule électrique ;
- la figure 11 présente les écarts relatifs entre la rentabilité d'un véhicule thermique et celle d'un véhicule électrique calculées à des températures différentes ;
- la figure 12 présente un diagramme montrant la durée de vie de batteries en fonction de la température ;
- la figure 13 présente la rentabilité en pourcentage entre véhicule électrique et thermique pour des températures et selon des configurations différentes ;
- la figure 14 présente un organigramme des principales étapes d'un procédé de détermination de la charge de batterie d'un véhicule en fonction de la mission.

## 5. DESCRIPTION DÉTAILLÉE

Sur toutes les figures du présent document, les éléments (ou les étapes) identiques sont désignées par une même référence numérique.

La première étape de détermination des caractéristiques des batteries consiste à déterminer les données nécessaires pour prévoir les besoins énergétiques du véhicule. Selon l'invention, la batterie est pré-dimensionnée et chargée en fonction du besoin de la mission, une étude du vieillissement met en évidence ses faiblesses et des stratégies de recharge adaptées permettent de préserver au maximum sa durée de vie. Le processus de détermination des caractéristiques de la batterie et/ou de sa charge met en jeu un algorithme d'optimisation qui règle les différents paramètres de dimensionnement, d'utilisation et de recharge pour satisfaire les besoins du client.

La détermination de l'énergie utile à un trajet s'effectue à travers un modèle énergétique complet. Ce modèle nécessite un nombre important de paramètres liés aux caractéristiques du véhicule qu'il convient d'estimer ou de calculer avec la plus grande précision. Le modèle énergétique comprend un modèle de la dynamique du véhicule afin de retraduire en énergie les besoins pour effectuer une mission. Cette modélisation est réalisée à partir des équations du principe fondamental de la dynamique appliqué au Véhicule Utilitaire Electrique (ou « VUE » en abrégé). Les coefficients des efforts aérodynamiques et de ceux liés à la résistance au roulement sont estimés par identification avec des enregistrements de roulage du véhicule. Afin de déterminer l'effort induit par la pesanteur, la masse du véhicule et le profil de la route (c'est-à-dire la pente à laquelle le véhicule est confronté), sont calculés. La masse du véhicule et par suite la masse des batteries embarquées a une influence directe sur les efforts donc sur l'énergie consommée.

$$m \frac{d\vec{v}}{dt} = \overrightarrow{F_{a\acute{e}ro}} + \overrightarrow{F_{roulement}} + \overrightarrow{F_{poids}} + \overrightarrow{F_{traction}} \quad (1)$$

Connaissant les caractéristiques énergétiques de la chaine de traction électrique et à partir du calcul de l'effort de traction issu de l'équation (1) ci-dessus, l'énergie nécessaire pour assurer une mission donnée est déterminée. A cela vient s'ajouter l'énergie utile à tous les consommateurs électriques du véhicule (calculateurs embarqués, assistance de conduite, air conditionné, auxiliaires métier, etc...). La mission réalisée par le véhicule est définie par de nombreuses informations, notamment par la distance du trajet, son relief, le profil de vitesse, les temps de pauses et la température ambiante. Afin de relever ces informations dans des situations réelles d'usage, un moyen d'acquisition mesure les caractéristiques physiques du trajet du type : vitesse et localisation du véhicule (à l'aide d'un module GPS qui indique également la position et l'altitude du véhicule), température extérieure, poids du chargement, etc.

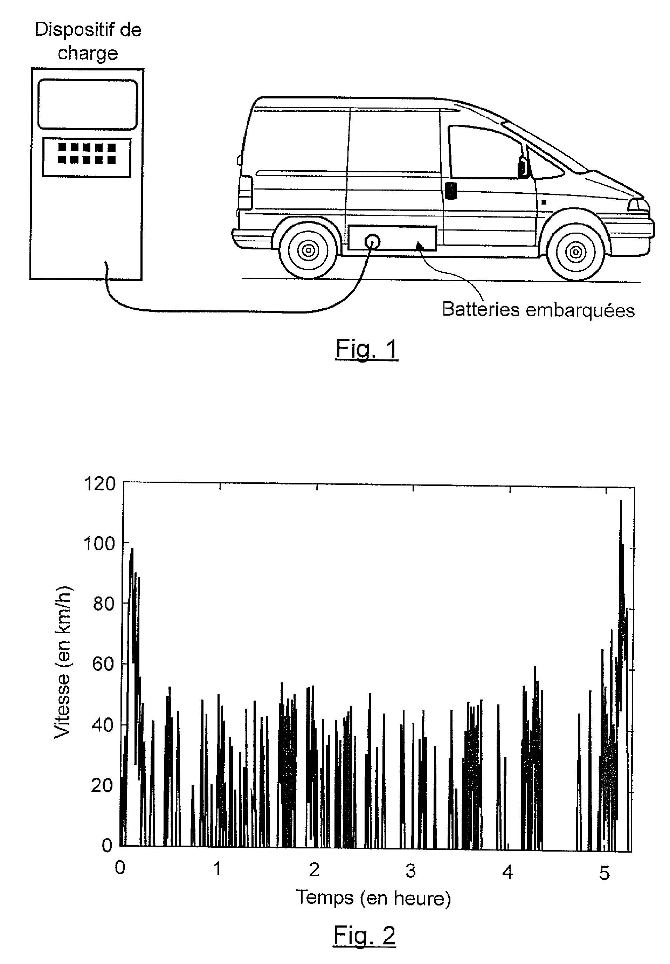

La figure 1 présente un véhicule électrique doté d'une batterie et connectée à un dispositif de charge. Ce véhicule est par exemple un fourgon destiné à effectuer des missions de livraison.

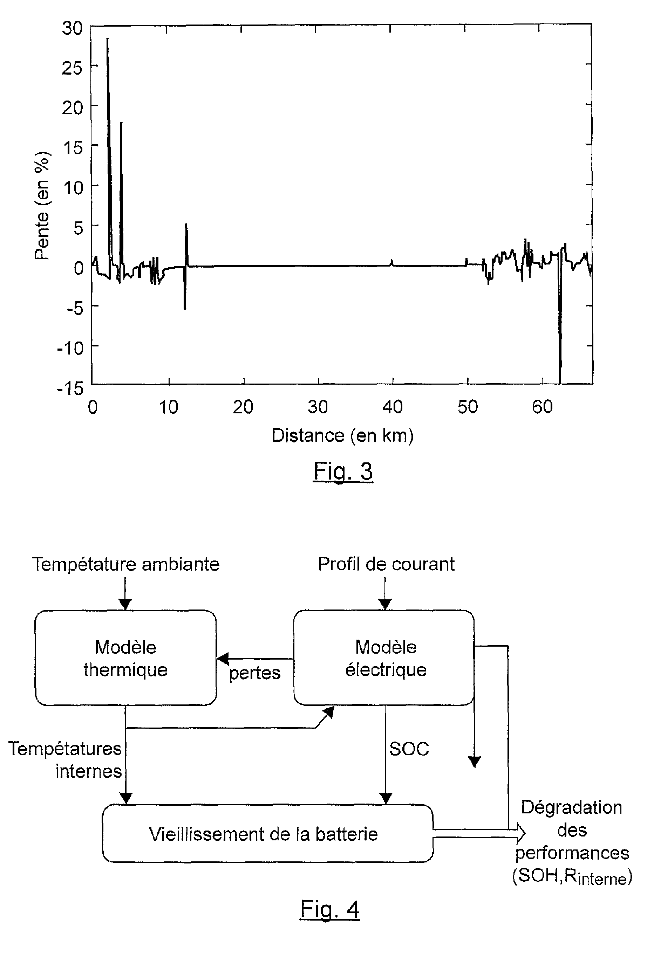

Le parcours choisi pour l'étude est un parcours de type livraison à domicile mixte de 67km sur 5h30 (Fig.2 et Fig.3). L'énergie correspondante à ce trajet, calculée avec le modèle énergétique est de 20kWh. Une centrale inertielle, comprenant accéléromètres et gyroscopes, recoupe les données du GPS pour en augmenter la précision. Un accès au réseau CAN (de l'anglais « Controler Network Area ») du véhicule apporte un complément de précision grâce aux informations fournies par les capteurs du véhicule électrique. Les instruments de mesure déterminent des profils de missions qui constituent des données d'entrée aux modèles et permettent de recaler les paramètres en comparant les sorties des modèles aux acquisitions.

Selon un perfectionnement, les paramètres de trajet et de consommation sont estimés à l'aide d'un véhicule thermique. Pour cela et selon une première étape, quelques missions que le VUE doit effectuer sont réalisées par un véhicule doté d'un moteur thermique en mesurant la quantité d'énergie fossile utilisée pour réaliser ces missions. Connaissant la proportion entre énergie fossile et énergie électrique pour que le même type de véhicule (avec des motorisations différentes) réalise les mêmes missions, il est possible de calculer l'énergie électrique équivalente nécessaire à ce véhicule. Lors des premières missions effectuées avec le VUE, il est préférable de mesurer précisément la consommation électrique pour corroborer l'équivalence thermique/électrique et vérifier ainsi que les paramètres physiques sélectionnés pour ce VUE correspondent bien aux missions à effectuer.

Le pré-dimensionnement de la batterie s'effectue à partir du profil de mission souhaité, par l'intermédiaire du modèle énergétique du véhicule décrit dans la partie précédente, en fonction de l'énergie nécessaire entre chaque recharge (20kWh). Une batterie est considérée en fin de vie lorsque celle-ci a perdu 20% de sa capacité initiale. La batterie sélectionnée par le pré-dimensionnement aura une capacité d'énergie nécessairement supérieure à 125% des besoins soit 25kWh. Soit une configuration de batterie 120s2p qui correspond bien aux besoins de la mission étudiée. Une configuration XXsYYp, signifie que la batterie est composée de « YY » blocs en parallèle et que chaque bloc comporte « XX » cellules en série. La masse de cette configuration est d'environ 400kg. A partir de ce premier pré-dimensionnement, l'optimisation de la batterie commence à être déterminée en prenant en compte la dégradation engendrée sur les composants de stockage de l'énergie. Il sera toujours possible par la suite de faire évoluer ce pré-dimensionnement en fonction des missions réelles, notamment si on s'aperçoit que la capacité de la batterie diminue anormalement au fil des missions effectuées.

Une fois la configuration de stockage pré-dimensionnée au plus juste, permettant ainsi à ce VUE d'effectuer correctement toutes les missions prévues, il est important de l'utiliser de façon que sa batterie vieillisse suffisamment lentement pour garantir un coût de revient optimal et conforme à la durée d'exploitation prévue. Si la configuration de stockage ainsi dimensionnée vieillie prématurément, le VUE ne pourra plus assurer ses fonctions et les batteries devront être remplacées, engendrant un coût pouvant être jusqu'à 45% du prix du véhicule. Afin d'appréhender au mieux ce vieillissement, un modèle multi-physique de la batterie est utilisé. Ce modèle multi-physique est constitué de plusieurs sous-modèles présentés à la Fig. 4.

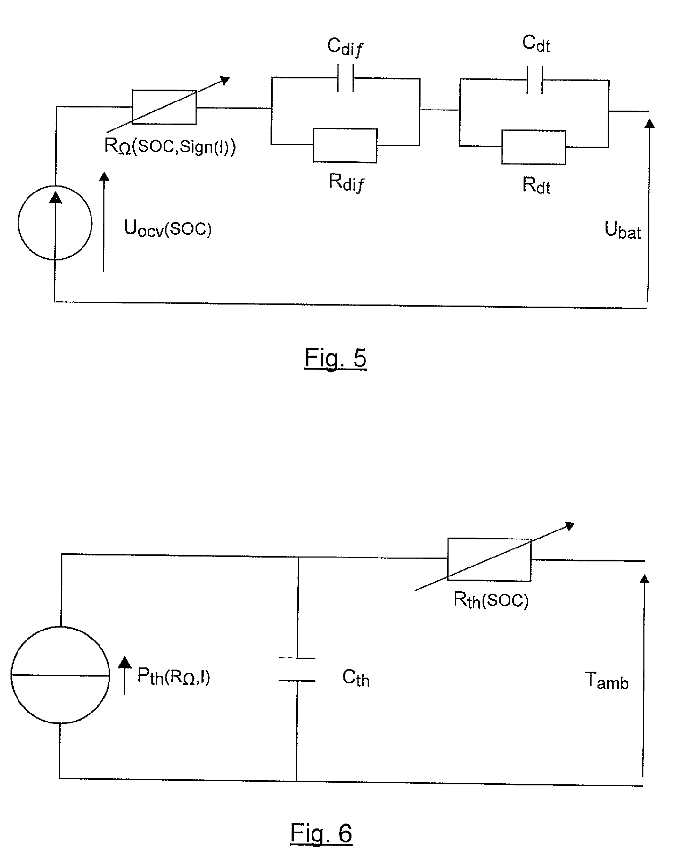

La Fig. 5 représente un modèle électrique basé sur un circuit électrique équivalent composé d'une source de tension, d'une résistance interne variable caractérisant la chute de tension liée aux pertes ohmiques de la batterie et de circuits R/C parallèles en série afin de décrire précisément la partie dynamique liée au comportement double couche (dl) et celle liée au phénomène de diffusion (dif).

Les équations (2) et (3) ci-dessous représentent le lien de la tension à vide et de la résistance interne $R_{\Omega}$ avec

le SOC. $x_i$ et $c_i$ sont les coefficients d'optimisation déterminés par identification avec les essais.

$$U_{OCV} = x_1 + x_2.e^{c_1(1-SOC)} + x_3.e^{c_2.SOC} + x_4.e^{c_3(1-SOC)^2} + x_5.e^{(c_4.SOC)^2} + x_6.e^{c_5(1-SOC)^3} + x_7.e^{(c_6.SOC)^3} \qquad (2)$$

$$R_\Omega = \frac{x_8}{\sqrt{SOC(1 + c_7.sign(I))}} \qquad (3)$$

Un modèle thermique équivalent vient compléter le modèle électrique pour traduire la dissipation en chaleur des pertes au sein de la batterie (Fig.6). La puissance thermique est directement induite des pertes ohmiques de la batterie (4). L'équation (5) représente le lien entre la résistance thermique et le SOC avec $a_1$ et $a_2$ les coefficients d'optimisation.

$$P_{th} = R_\Omega I^2 \qquad (4)$$

$$R_{th} = a_1 + a_2.SOC^3 \qquad (5)$$

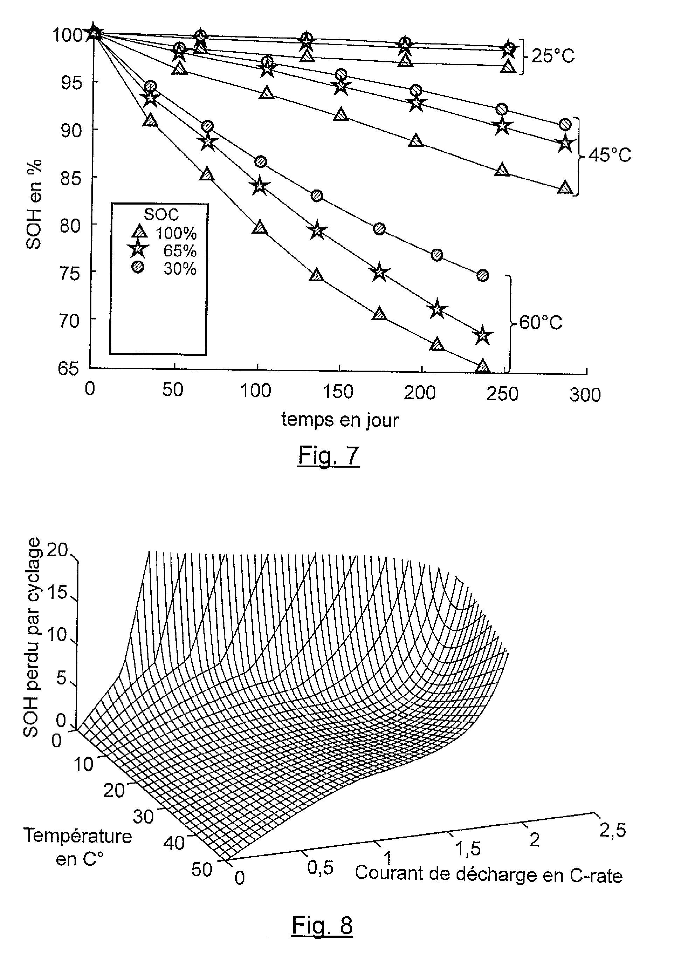

Rappelons que, comme le montre la Fig. 7, une cellule de batterie vieillit d'autant plus que le niveau de charge et la température sont important.

Le vieillissement en cyclage se cumule avec le vieillissement calendaire, et apparait lorsqu'un courant est utilisé sur la batterie. Il dépend du courant, de l'état de charge, de la température et du temps. Les plans d'essais élaborés en collaboration avec le CEA qui les a ensuite réalisés, comprennent des essais calendaires sous 3 températures et 3 niveaux de SOC, et des essais de cyclage sous 3 températures, 3 niveaux de courant et 5 plages de SOC. Afin de construire un modèle de vieillissement complet, la première étape est la détermination du modèle calendaire, adapté à la technologie étudiée LFP. L'équation retenue (6) tient compte du temps à la puissance ¾, de la température et du SOC.

$$a_{bat}(t,T,SOC) = c_a \cdot t^{\frac{3}{4}} c_T^{\frac{T-T_0}{\Delta T}} \cdot c_{SOC}^{\frac{SOC-SOC_0}{\Delta SOC}} \qquad (6)$$

De même que pour les autres équations du modèle de batterie, les coefficients $c_a$, $c_T$, $c_{SOC}$, $T_0$, $\Delta T$, $SOC_0$ et $\Delta SOC$ sont déterminés par identification aux résultats d'expérience à l'aide d'un algorithme PSO-NM (de l'Anglo-Saxon « Particular Swarm Optimisation-Nelder-Mead »). L'erreur relative entre la mesure expérimentale et le calcul est inférieure à 2%, ce niveau d'erreur est acceptable et valide le paramétrage et la modélisation. A partir de la dégradation globale de la batterie lors des essais en cyclage, la partie liée au vieillissement en cyclage est établie en soustrayant la contribution du calendaire calculée à l'aide de l'équation précédemment déterminée. Le vieillissement en cyclage est ensuite identifié à une pente en fonction des conditions de température, de SOC, de courant et de quantité d'énergie déchargée. La figure 8 représente l'évolution de la dégradation de l'état de santé de la batterie en fonction de la température et du courant pour un cyclage de 1500 cycles.

La modélisation de ces vieillissements conduit à la détermination du vieillissement total de la batterie afin d'estimer et optimiser sa durée de vie en agissant sur les conditions d'utilisation et de recharge. Des simulations ont été effectuées pour la configuration de batterie choisie précédemment, sous trois températures de fonctionnement (10°C, 25°C et 37°C) afin d'en comparer le vieillissement (Tableau 1).

Le tableau 1 ci-dessous présente le calcul du vieillissement à 20% en fonction de la température pour une mission identique.

| Température | Configuration 120s2p |
|---|---|
| 10°C | 2 ans et 6 mois |
| 25°C | 3 ans et 7 mois |
| 37°C | 2 ans et 8 mois |

La consommation d'énergie pour assurer cette mission représente 80% de l'énergie d'une configuration de batterie composée de 2 séries de cellules en parallèle. on peut constater que la durée de vie de la batterie est relativement faible pour la mission choisie par rapport à la durée de vie d'un véhicule thermique.

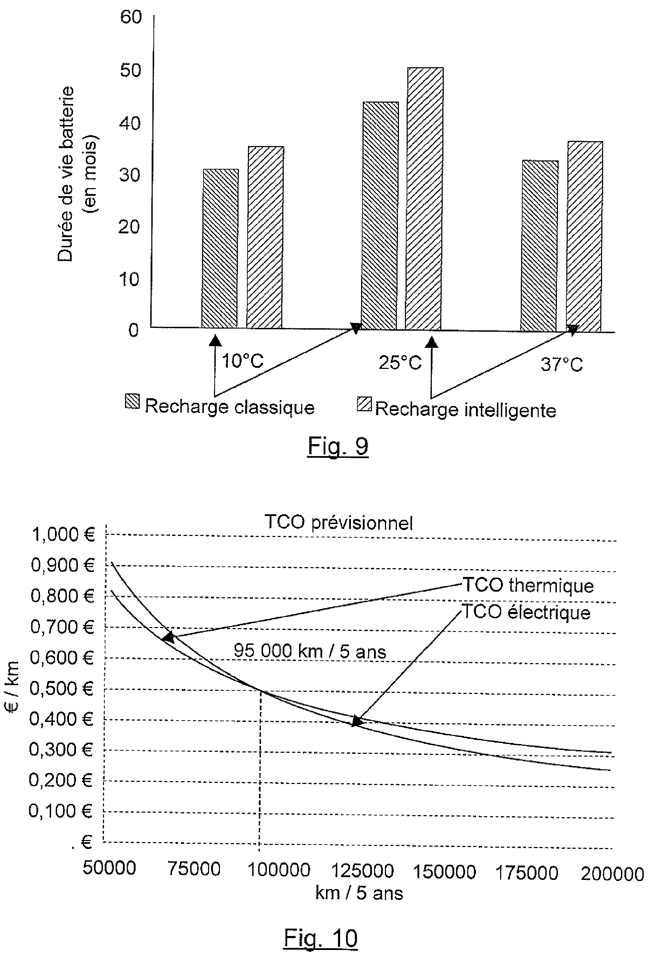

La stratégie de recharge de la batterie est une phase importante de l'optimisation du coût de revient global. La modélisation du vieillissement des cellules électrochimiques montre que la durée de vie des batteries est liée à l'état de charge des batteries. De manière générale, la recharge d'un véhicule électrique se fait à partir du moment où celui-ci est connecté à une borne de recharge. Or celui-ci n'est pas toujours utilisé immédiatement après son cycle de recharge, ce qui induit un temps considérable de stationnement du véhicule à un niveau de charge élevé. De plus, les besoins en énergie pour assurer la mission du lendemain peuvent être inférieurs à la capacité en énergie du système de stockage. En rechargeant le véhicule de manière différée, un niveau de charge bas est maintenu le plus longtemps possible, ce qui limite le vieillissement calendaire. Selon un aspect de la présente invention, une charge au juste nécessaire des besoins en énergie permet de limiter le niveau de charge et de minimiser le vieillissement de la batterie. En outre, la minimisation du vieillissement lors de la recharge passe également par l'exploitation des modèles de vieillissement. La gestion de la recharge du véhicule doit tenir compte des variations de température, des conditions économiques (coût de l'électricité, ...), des moments où les besoins de l'entreprise sont minima (ou ceux du pays le sont également), et des limites de courants durant la période de charge potentielle, afin de choisir les périodes de recharge, leurs durées et les niveaux de courants à utiliser pour obtenir une durée de vie maximale. Une simulation de la durée de vie, avec une stratégie de charge différée et au juste nécessaire des besoins, est réalisée (Fig. 9) pour le parcours mixte décrit précédemment, et toujours sous les trois mêmes températures de fonctionnement, afin de comparer les résultats à ceux du tableau 1. La température des missions qui seront effectuées avec le VUE n'est évidemment pas connue à l'avance. Néanmoins, il est possible de la déterminer à l'avance par la connaissance de la température moyenne du lieu où le véhicule sera utilisé. De même, il est possible de recevoir les prévisions météorologiques pour connaître la température (et l'état du temps en général) prévue lors du déroulement de la mission, et de déterminer la charge des batteries en conséquence. Cette température peut être téléchargée automatiquement par le logiciel à partir d'un serveur de prévisions météorologiques, ou introduite à la main à l'aide d'une Interface Homme/Machine (IHM).

Cette intelligence de la recharge s'effectue en s'assurant que la borne soit capable de fournir l'électricité dans la période optimale et passe par une communication avec le réseau électrique. De fait, l'utilisateur est assuré d'avoir un véhicule disponible et économique.

Le calcul de la rentabilité ou TCO (de l'Anglo saxon « Total Cost of Ownership ») tient compte par définition de l'ensemble des coûts liés à la possession du véhicule utilitaire électrique. En premier lieu il y a le prix du véhicule en lui-même dont ses batteries représentent une grande part. Il faut également tenir compte des dépenses en énergie (électricité ou hydrocarbure pour la comparaison avec le véhicule thermique) et des frais liés à l'entretien (plus élevé pour un thermique avec les vidanges filtres et pièces d'usures comme l'embrayage, les injecteurs et les courroies). Il vient ensuite les avantages fiscaux que le véhicule électrique suscite tel que le bonus écologique, une carte grise moins chère, etc... Enfin, la valeur résiduelle du véhicule est prise en compte avec une perte de valeur plus rapide pour la batterie que le reste du véhicule puisque c'est l'élément qui va vieillir le plus vite. La figure 10 représente pour les mêmes conditions d'usage (trajet, t°, ...) la comparaison du TCO entre un véhicule électrique et un thermique au bout de 5 ans en fonction du nombre de kilomètres parcourus. Il apparait que plus le véhicule électrique parcours de kilomètres, plus il devient compétitif par rapport au thermique. Il est dans ce cas plus rentable que le véhicule thermique à partir de 95 000 km parcourus en 5ans. Ce phénomène est évidemment dû, pour la plus grande part, à la différence de cout de l'énergie en faveur de l'électrique. Le calcul est fait en supposant que la durée de vie de la batterie soit de 5 ans au minimum. Pour le parcours étudié, au bout de 5 ans, le véhicule aurait parcouru 120 000 km. Or les simulations issues de la modélisation multi-physique montrent que les batteries ont des durées de vie inférieure à 5 ans pour les trois conditions de températures étudiées. Il est donc indispensable de coupler l'ensemble des modèles et calculs pour estimer la rentabilité d'une configuration de batterie.

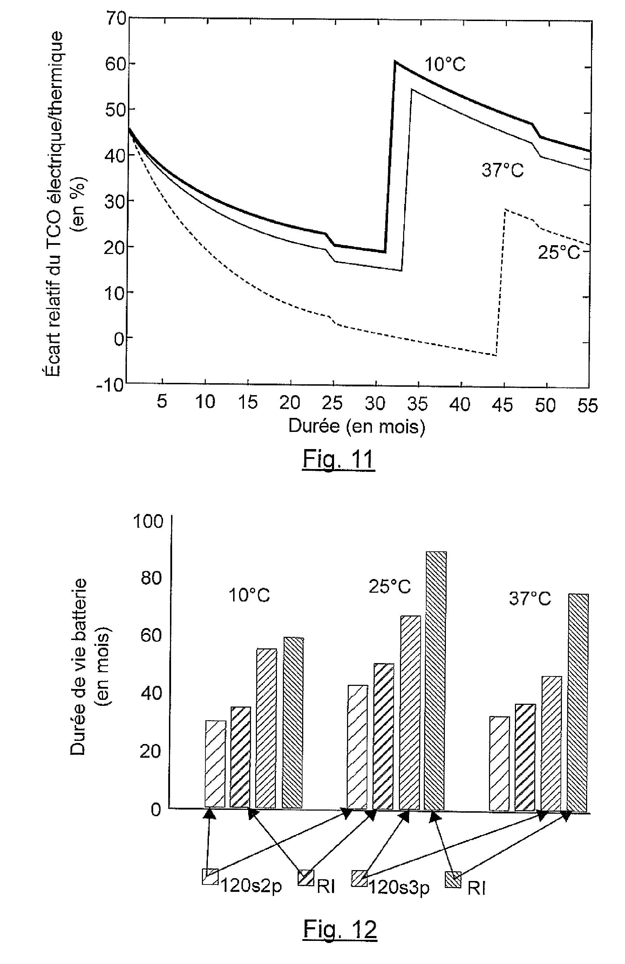

Un logiciel global développé par le demandeur pilote l'ensemble des modèles multi-physiques, effectue le calcul du TCO et l'optimise avec une méthode itérative. La figure 11 représente les évolutions des écarts relatifs du TCO du véhicule électrique pour la configuration 120s2p, sous différentes températures, relativement au TCO du véhicule thermique.

Ce logiciel permet de déterminer le nombre de cellules de la batterie et sa capacité électrique globale en fonction de l'ensemble des missions que ce VUE va effectuer. Le logiciel comporte une étape d'introduction de paramètres caractérisant ces missions en proposant d'introduire un ou plusieurs des paramètres suivants :

- distance parcourue par an ou par jour,
- poids moyen des marchandises transpostés,
- température extérieure moyenne de l'endroit où les missions sont effectuées,

- profil de pente du parcours,
- limitation éventuelle des performances.

Comme le montre la figure 11, seule l'étude à 25°C devient plus rentable que le véhicule thermique équivalent au bout de 30 mois et jusqu'à la fin de la vie de la batterie. Afin de comparer les dimensionnent de batterie, les calculs de TCO sont exécutés avec une configuration surdimensionnée 120s3p. Elle contient 50% de plus d'énergie et sa masse est augmentée du même ratio soit 200kg. Le résultat des simulations illustré par la figure 12 met en évidence le fait que le surdimensionnement de la batterie entraine une durée de vie plus longue dans les mêmes conditions. Cela est directement dû à la diminution du courant vu par la batterie qui est divisé par 1.5 avec une configuration de 3 séries de cellules en parallèle au lieu de 2.

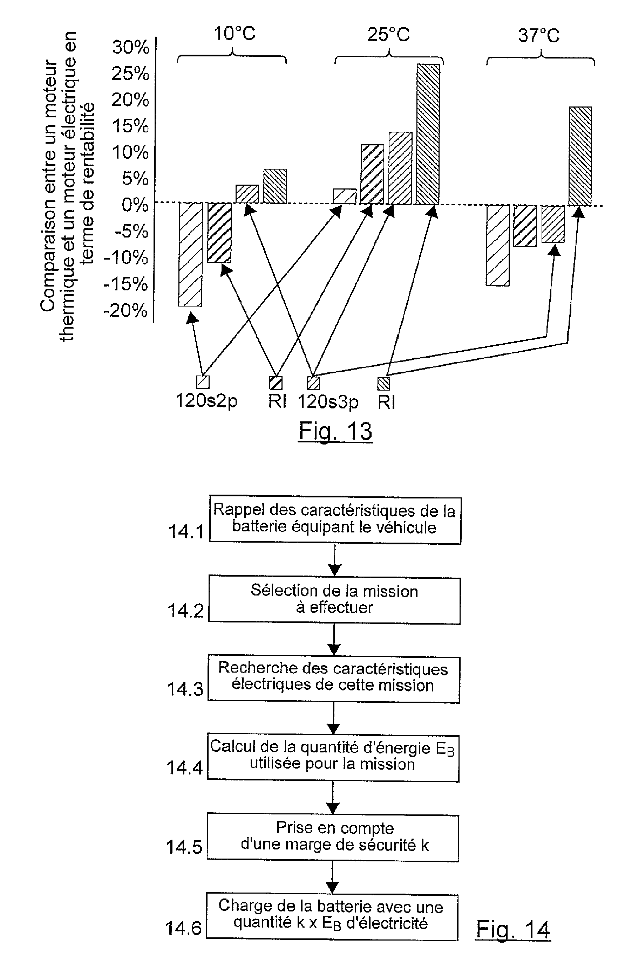

Le résultat ainsi obtenu par le calcul du vieillissement de la batterie doit être confronté au calcul du TCO dans l'algorithme d'optimisation. En effet, il faut comparer l'avantage lié au gain de durée de vie par rapport à la différence de prix des différentes configurations. Une batterie avec une durée de vie plus importante n'est pas spontanément plus rentable puisque son prix sera indéniablement plus élevé. Cependant dans ce cas d'étude, les résultats de calculs illustrés par la figure 13 montrent que la batterie surdimensionnée dure plus longtemps et est de ce fait plus rentable sur le long terme, notamment avec la stratégie de recharge intelligente. En effet, la durée de vie d'une batterie surdimensionnée est nettement plus grande que celle d'une batterie sous-dimensionnée. Cette différence est d'autant plus grande lorsque la température d'utilisation de la batterie est faible (10°C par exemple) ou importante (37°C par exemple).

Il apparait également que pour des températures élevées (37°C), seule la configuration surdimensionnée, avec une stratégie de recharge intelligente, est plus rentable que la configuration véhicule thermique. Enfin, concernant la configuration 120s2p, bien que la durée de vie ne permet pas d'atteindre 5 ans, le véhicule électrique n'est pas plus coûteux pour une utilisation à 25°C qu'un véhicule thermique.

L'outil logiciel mis à la disposition des utilisateurs intègre un modèle de vieillissement, que le Demandeur a fait évolué, identifié et validé par un plan d'expérience basé sur sa connaissance des conditions d'usage supposées représentatives. Ainsi qu'un module de gestion de recharge intelligente permettant d'optimiser le vieillissement de la batterie et les conditions économiques de la charge.

Une IHM permet d'entrer les données et de visualiser les résultats. L'architecture du logiciel et de l'interface intègre et synthétise l'expérience du Demandeur dans le domaine du VUE.

La figure 14 présente un organigramme des principales étapes d'un exemple procédé de détermination de la charge de batterie d'un véhicule en fonction de la prochaine mission à effectuer. Dans un premier temps, à l'étape 14.1, un opérateur sélectionne un véhicule électrique et rapatrie de ce véhicule les caractéristiques de la batterie. Ces caractéristiques concernent notamment :

- Capacité nominale indiquée par le constructeur de batteries,
- quantité d'énergie restant dans la batterie avant la charge,
- usure de la batterie en % réduisant ainsi la capacité nominale de cette batterie.

Puis, l'opérateur sélectionne la mission à effectuer le lendemain par exemple, parmi un catalogue de mission (étape 14.2). La sélection peut consister à choisir un certain nombre de points géographiques déterminant le trajet à effectuer. L'opérateur indique également la nature de cette mission, et notamment le poids du chargement à transporter. Un coefficient multiplicateur (par exemple, 1,05 % pour 100 Kilogrammes de chargement transporté) est appliqué à la valeur de quantité d'énergie EB à fournir à la batterie lors de la charge. Le modèle énergétique associé au VUE prend en compte la masse du véhicule avec son chargement (effet pesanteur - poids dans équation (1) en présence de la somme des dénivelés introduite lors de la définition du trajet associé à la mission. Le logiciel fournissant le calcul de l'énergie permettant d'effectuer la mission prend en compte l'ensemble des paramètres.

A l'étape 14.3, le logiciel applique les équations du modèle énergétique, et en particulier l'équation (1) pour calculer la quantité d'énergie nécessaire pour mener à bien la mission sélectionnée. Comme il a été dit précédemment, cette quantité d'énergie dépend notamment de la distance à parcourir, du relief, du profil de vitesse, des temps de pauses et de la température ambiante. Cette quantité d'énergie est obtenue en moyennant des valeurs mesurées au cours de trajet de test, avec éventuellement des conducteurs différents, et en enregistrant les résultats dans un tableau à une ou plusieurs entrées. Il est possible d'augmenter la précision de cette valeur en augmentant le nombre d'entrées pour prendre en compte, en plus des kilomètres, la température, le poids du chargement, le conducteur, la présence de trafic routier intense à certaines heures, ... Avantageusement, la valeur calculée peut être pondérée selon la conduite ou trafic intense. Les autres paramètres mentionnés précédemment sont implicitement pris en compte dans le modèle multi physique

Selon un perfectionnement, le logiciel prend également en compte le type de mission à effectuer, parmi une liste de type de mission tels que :

- conduite sur route et peu d'arrêt,
- conduite sur autoroute et peu d'arrêt,
- conduite sur route et beaucoup d'arrêts (type livraison du courrier),
- conduite en ville, beaucoup d'arrêt (type relève de compteur dans un quartier),

Selon ce perfectionnement, un coefficient multiplicateur est appliqué au nombre de kWh dont la valeur dépend du type de mission. Par exemple, un véhicule utilitaire de 1,3 tonnes, destiné faire une mission de livraison de courrier, consomme 25 kWh pour 100 km. Si l'opérateur définit un trajet de 200 km, il faut prévoir de charger au minimum : 50 kWh. La valeur du coefficient multiplicateur associé à ce type de mission est 1,1 ; pour cette mission, la batterie doit donc être chargée au départ d'au moins 55 kWh = $E_B$. Les valeurs de coefficient multiplicateur sont obtenues expérimentalement en mesurant à l'aide d'un ampèremètre la consommation électrique du véhicule lors de missions réelles.

L'étape de calcul de la quantité d'énergie $E_B$, pour accomplir la mission (étape 14.4) se poursuit par la prise en compte de la quantité d'énergie restant dans la batterie avant la charge et l'usure de la batterie qui diminue sa performance à restituer l'énergie emmagasinée. Soit = $E_{B1}$, le nombre de kWh restant dans la batterie et U le pourcentage d'usure, la valeur de charge devient : ($E_B$ - $E_{B1}$) x (1 + U). Supposons qu'il reste 10 kWh dans la batterie et que son niveau d'usure est à 10 %, alors la charge nécessaire ce véhicule pour effectuer cette mission est de (23 - 10) x 1,1 = 15 kWh.

A l'étape 14,5, une marge de sécurité est appliquée de façon à faire face aux imprévus, cette marge est une quantité d'énergie en plus de ce qui est nécessaire pour accomplir la mission. Par exemple, la marge de sécurité est de 20 %, ce véhicule sera finalement chargé avec 17 kWh.

Une fois que la quantité d'énergie est déterminée totalement, la charge peut s'effectuer (étape 14.6).

De façon générale, l'outil logiciel permettant de déterminer la configuration optimale des batteries d'un véhicule et/ou la stratégie de recharge intelligente de la batterie prend notamment en compte les paramètres suivants :

- la configuration du véhicule (fourgon tôlé, châssis cabine, ...),
- les outils auxiliaires (groupe frigorifique, système de treuillage électrique, ...),
- le(s) parcours réalisé(s) par le véhicule (la localisation, le dénivelé, le nombre de km),
- la mission (chargement, nombre d'arrêt)
- la conduite (les accélérations)
- la température

La majorité de ces données sont calculables grâce à des relevés sur un véhicule, thermique par exemple, et cela moyennant un boitier d'acquisition et une méthode de dépouillement proposé par le Demandeur. La phase de recueil des données Parcours/Missions/Conduite peut être automatisée et intégrée au logiciel.

L'IHM retourne à l'utilisateur une analyse portant sur l'utilisation du véhicule en lui-même et ses besoins en énergie, une analyse portant sur le choix de la configuration de batterie et un résultat d'optimisation pour indiquer la configuration la plus avantageuse. L'ensemble de ces résultats prend en compte le vieillissement des batteries dans les conditions d'utilisation envisagées. Le logiciel préconise également des stratégies de recharge à utiliser afin de prévenir le vieillissement de la batterie. Selon un mode simple de réalisation, l'IHM affiche la quantité d'énergie à charger, l'utilisateur le note et programme le chargeur avec cette valeur. Selon une variante où l'ordinateur exécutant le logiciel peut se connecter au chargeur, si l'opérateur accepte cette préconisation, le logiciel transmet automatiquement au chargeur les paramètres et lance la charge sans autre intervention manuelle. L'opérateur introduit l'heure du démarrage de la mission dans l'IHM, de façon que le véhicule soit prêt à partir à l'heure indiquée.

Les modèles développés, l'étude et les stratégies de recharges sont transposables à d'autres batteries, technologies de stockage d'énergie et engins électriques professionnels sur batteries.

**Revendications**

1. Procédé de détermination de caractéristiques physiques de batteries embarquées dans un véhicule électrique (VUE), ledit véhicule étant destiné à effectuer au moins une mission, **caractérisé en ce qu'**il comporte une étape préalable de saisie de paramètres physiques caractérisant l'au moins une mission que le véhicule va effectuer prochainement, et une étape de sélection de caractéristiques physiques parmi un ensemble de caractéristiques en fonction de l'au moins une mission que ledit véhicule va effectuer prochainement.

2. Procédé selon la revendication 1, **caractérisé en ce que** l'étape de sélection détermine un profil de charge de la batterie pour la charger à partir d'un état quasi déchargé, ledit profil de charge étant déterminé en fonction de la prochaine mission à effectuer.

3. Procédé selon la revendication 2, **caractérisé en ce que** le profil de charge est calculé en fonction de l'un au moins des paramètres suivants déterminés à partir de l'état actuel des batteries :

    - Capacité nominale indiquée par le constructeur de batteries,
    - quantité d'énergie restant dans la batterie avant la charge,
    - usure de la batterie en % réduisant ainsi la capacité nominale de cette batterie.

4. Procédé selon la revendication 2 ou 3, **caractérisé en ce que** le profil de charge est calculé en fonction de l'un au moins des paramètres suivants caractérisant la mission à effectuer :

    - distance à effectuer,
    - poids du chargement,
    - température extérieure prévue,
    - type de mission.

5. Procédé selon la revendication 1, **caractérisé en ce que** l'étape de sélection détermine le nombre de cellules de la batterie et la capacité globale de la batterie en fonction de l'ensemble des missions que ledit véhicule doit effectuer.

6. Procédé selon la revendication 5, **caractérisé en ce qu'**il comporte une étape d'introduction de paramètres caractérisant les missions que ledit véhicule doit effectuer, ces paramètres étant pris dans l'ensemble des paramètres suivants :

    - distance parcourue par an ou par jour,
    - poids moyen des marchandises transpostés,
    - température extérieure moyenne de l'endroit où les missions sont effectuées,

        . profil de pente du parcours,
        . limitation des performances.

7. Procédé selon l'une quelconque des revendications précédentes, **caractérisé en ce qu'**il comporte une étape au moins de mesure de la quantité d'énergie fossile utilisée par un moteur thermique pour permettre à un véhicule de réaliser une mission, et une étape de calcul de l'énergie électrique équivalente pour effectuer la même mission à l'aide d'un véhicule électrique, les caractéristiques physiques sélectionnées pour effectuer ces missions prenant en compte l'énergie électrique équivalente ainsi calculée.

Dispositif de
charge

Batteries embarquées

<u>Fig. 1</u>

<u>Fig. 2</u>

Fig. 3

Fig. 4

$$C_{dif} \qquad C_{dt}$$

$$R_\Omega(SOC, Sign(I))$$

$$R_{dif} \qquad R_{dt}$$

$$U_{ocv}(SOC) \qquad U_{bat}$$

Fig. 5

$$R_{th}(SOC)$$

$$P_{th}(R_\Omega, I) \qquad C_{th} \qquad T_{amb}$$

Fig. 6

Fig. 7

Fig. 8

Fig. 9

Fig. 10

Fig. 11

Fig. 12

Fig. 13

| 14.1 | Rappel des caractéristiques de la batterie équipant le véhicule |
| 14.2 | Sélection de la mission à effectuer |
| 14.3 | Recherche des caractéristiques électriques de cette mission |
| 14.4 | Calcul de la quantité d'énergie $E_B$ utilisée pour la mission |
| 14.5 | Prise en compte d'une marge de sécurité k |
| 14.6 | Charge de la batterie avec une quantité k x $E_B$ d'électricité |

Fig. 14

Europäisches
Patentamt

European
Patent Office

Office européen
des brevets

# RAPPORT DE RECHERCHE EUROPEENNE

Numéro de la demande

EP 16 18 9062

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 596 977 A1 (ATS GROUP IP HOLDINGS LTD [VG]) 29 mai 2013 (2013-05-29) * alinéas [0048] - [0052] * ----- | 1-7 | INV. B60L11/18 |

|  |
|---|
| **DOMAINES TECHNIQUES RECHERCHES (IPC)** |
| B60L |

Le présent rapport a été établi pour toutes les revendications

| Lieu de la recherche | Date d'achèvement de la recherche | Examinateur |
|---|---|---|
| La Haye | 29 septembre 2017 | Bellatalla, Filippo |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.............................................................................
& : membre de la même famille, document correspondant

EPO FORM 1503 03.82 (P04C02)

EP 3 254 885 A1

**ANNEXE AU RAPPORT DE RECHERCHE EUROPEENNE**
**RELATIF A LA DEMANDE DE BREVET EUROPEEN NO.**

EP 16 18 9062

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2017

| Document brevet cité au rapport de recherche | Date de publication | Membre(s) de la famille de brevet(s) | Date de publication |
|---|---|---|---|
| EP 2596977 A1 | 29-05-2013 | AUCUN | |

Pour tout renseignement concernant cette annexe : voir Journal Officiel de l'Office européen des brevets, No.12/82